# EUROPEAN PATENT SPECIFICATION

(11) **EP 1 892 027 B1**
(45) Date of publication and mention of the grant of the patent: **02.07.2014**
(21) Application number: 07015409.1
(22) Date of filing: 06.08.2007
(51) Int. Cl.: B01D 35/30

(54) **Water purification apparatus having a pivotable top cover**
Wasserreinigungsvorrichtung mit einer schwenkbaren Anschlusshaube
Appareil de purification d'eau comprenant une couvercle articulée

(30) Priority: 21.08.2006 CN 200620131534 U
(43) Date of publication of application: 27.02.2008
(73) Proprietor: Lin, Yi-Chou, County 508 (TW)
(72) Inventor: Lin, Yi-Chou, Changhua County 508 (TW)
(74) Representative: Straus, Alexander

(56) References cited:
- WO-A-03/072220
- US-A- 6 120 685
- US-A1- 2002 104 794
- US-A1- 2003 168 394
- US-A1- 2006 000 754

## Description

### BACKGROUND OF THE INVENTION

### 1. Field of the Invention

The present invention relates to a water purification apparatus and more specifically, to a water purification apparatus, which is convenient in filter exchange work and reduce the space.

### 2. Description of the Related Art

In general, a water purification apparatus may include a filter for filtering or purified water, thereby removing some of its impurities. When the water purification apparatus has been used for a while, the filter will gradually lower its filtration ability due to the accumulation of impurities, resulting in that the filter has to be exchanged.

U.S Pat. No. 2006/0000761 disclosures a one-touch fitting type adapter and a filter assembly. When the filter assembly is assembled with the adapter, a collar flange of the filter assembly will move upward along slide plates of the adapter while horizontally moving the slide plates of the adapter in left and right directions. When the collar flange of the filter assembly moves upward beyond the slide plates of the adapter, the slide plates of the adapter may return to their initial position so that the filter assembly is engaged with the adapter.

In machinery equipped with a plurality of the filter assemblies, such as water purifiers or water ionizers, the machinery will provide a plurality of the one-touch fitting adapters aligned parallel to each other for coupling the filter assemblies. When the life span of the filter assemblies expires, the filter assemblies have to be selectively exchanged.

However, the filter assembly and the adapter cause a complex coupling or decoupling way, resulting in a difficulty in filter exchange work. In addition, the interior space of the machinery is limited and the filter assembly cannot be pivoted to the outside of the machinery during the filter exchange work, causing users to be difficult to exchange the filter assembly. Thus, it is a need to provide an improved filter assembly that does not have the aforesaid drawbacks.

US 2006/000754 A relates to a water shut-off device for a water purifier and discloses a cartridge containing a filter which is plug-connected to spatially separated first and second connector ports which are in fluid communication with water inlet and outlet passageways, respectively.

### SUMMARY OF THE INVENTION

The present invention has been accomplished in view of the above-noted circumstances. It is therefore one objective of the present invention to provide a water purification apparatus, which is convenient to exchange a filter.

To achieve this objective of the present invention, a water purification apparatus according to claim 1 is provided.

Further scope of applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG 1 is a perspective view of a preferred embodiment of the present invention, showing the housing is located at the first position;
FIG 2 is a front view of a part of the preferred embodiment of the present invention;
FIG 3 is an exploded view of a part of the preferred embodiment of the present invention;
FIG 4 is a perspective view of the filter assembly of the preferred embodiment of the present invention;
FIG 5 is a perspective view of a part of the preferred embodiment of the present invention, showing the top cover is disengaged with the housing;
FIG 6 is a sectional view of a part of the preferred embodiment of the present invention, showing the top cover is engaged with the housing;
FIG 7 is a perspective view of the preferred embodiment of the present invention, showing the housing is located at the second position.

FIG 8 is a sectional view of a part of the preferred embodiment of the present invention, showing the top cover is disengaged with the housing.

### DETAILED DESCRIPTION OF THE INVENTION

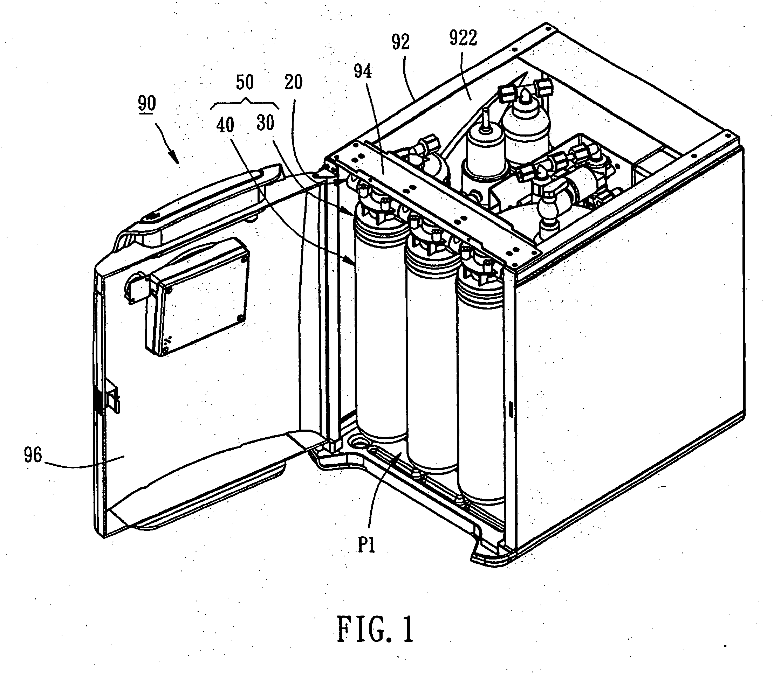

As shown in FIG 1 to FIG 6, a water purification apparatus **90** in accordance with a preferred embodiment of the present invention comprises a main body **92**, a lid 96, four holders **20,** three top covers **30,** and three housings **40.**

The main body **92** has an accommodation chamber **922** inside and a plate **94** on a top side thereof.

The lid **96** is pivotally mounted on a front side of the main body **92** and closable on the front side of the main body **92** to close the accommodation chamber **922** of the main body **92.**

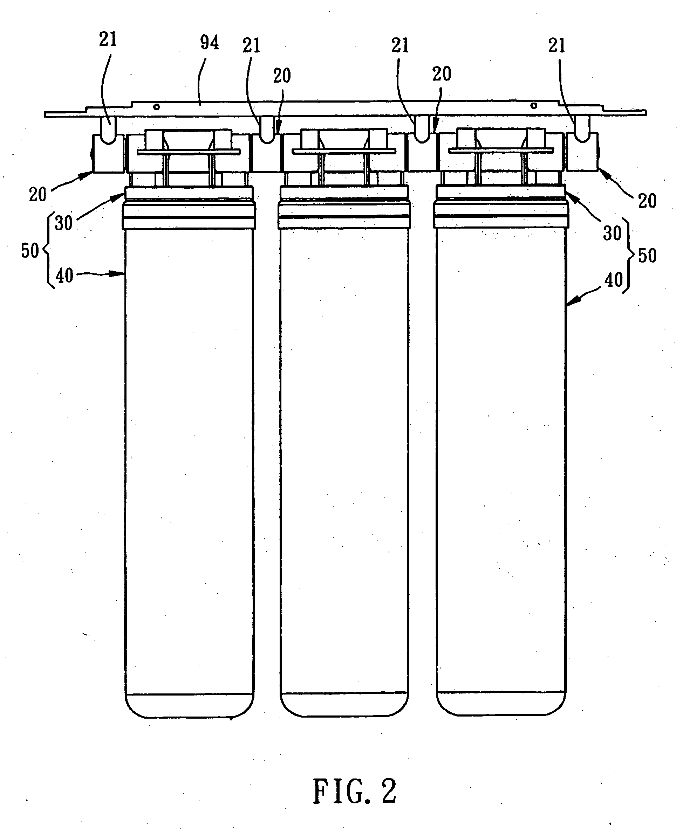

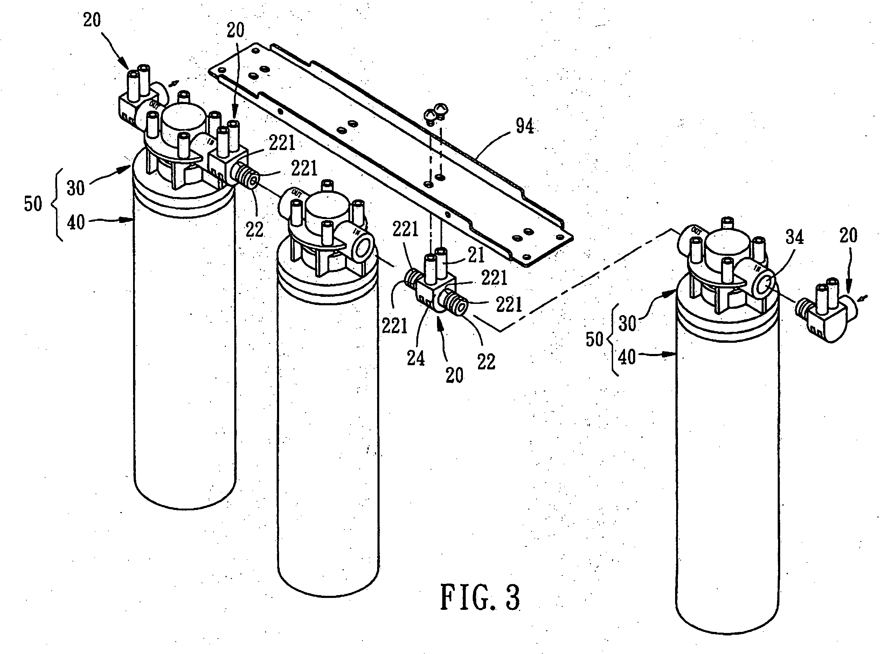

Referring to FIG 2 and FIG 3, the holders **20** each have a connecting portion **24,** two dangling portions **21** on a top side of the connecting portion **24,** and a pair of water-guiding portions **22** extending from two sides of the connecting portion **24.** The dangling portions **21** are fixed on the plate **94 of** the main body **92** such that the top side of the connecting portion **24** of the holder 20 defines with a bottom side of the plate **94** of the main body **92** a distance. The holders **20** further has a plurality of O-rings **221** fixed on the water-guiding portions **22.**

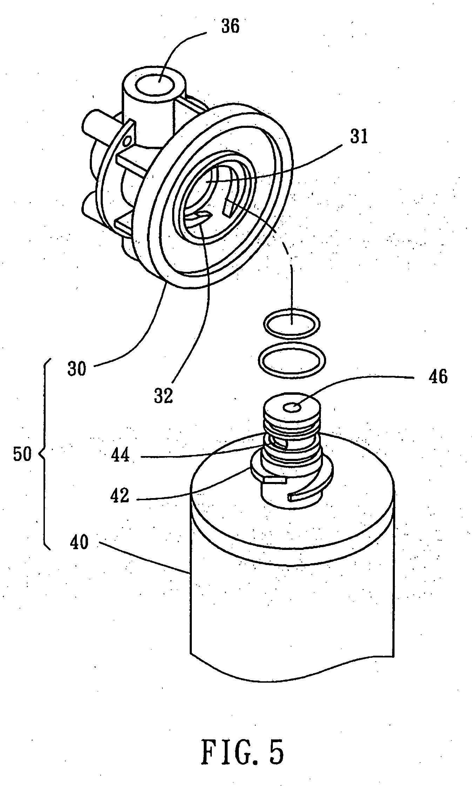

Referring to FIG 3 and FIG 5, the top cover **30** have a cavity **31** on a bottom side thereof, a retaining portion **32,** which is a spiral protrusion formed on a periphery of the cavity **31,** an inlet **34** on a top section thereof, and an outlet **36** on the opposite side of the inlet **34.** One distal end of the water-guiding portion **22** of the holder **20** can be inserted into the inlet **34 or** the outlet **36** of the top cover **30** and the O-rings **221** of the holder **20** fixed on the water-guiding portion **22** can be in contact with an inner periphery of the inlet **34** or the outlet **36** of the top cover **30** such that the top cover **30** is pivotable about the axis of the water-guiding portions **22** of the holder **20** and water is stopped by the O-rings **221** of the holder **20.**

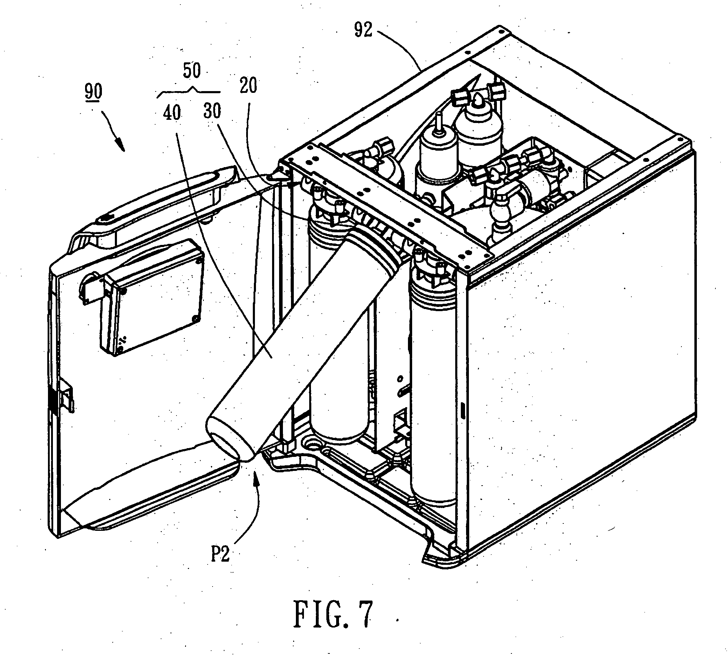

The housing **40** has a receiving chamber (not shown) inside for accommodation of a filter, a jamming portion **42,** which is a spiral protrusion formed on a top side thereof, a first water filler hole **44** in communication with the inlet **34** of the top cover **30** and a second filler hole **46** in communication with the outlet 36 of the top cover **30.** When the spiral protrusion of the housing **40** is inserted in the cavity **31** of the top cover **30** to attach to the spiral protrusion of the top cover **30** and rotated 90 degrees, the housing **40** and the top cover **30** are engaged with each other to make up a filter assembly **50.** Further, because of the existence of the distance between the connecting portion **24** of the holder **20** and the plate **94** of the main body **92** of the water purification apparatus **90,** the top cover **30** and the housing **40** can be pivotable relative to the main body **92** between a first position **P1** where the housing 40 is located in the accommodation chamber **922** of the main body **92,** as shown in FIG 1, and a second position **P2** where the housing **40** is rotated to the outside of the main body **92,** as shown in FIG 7.

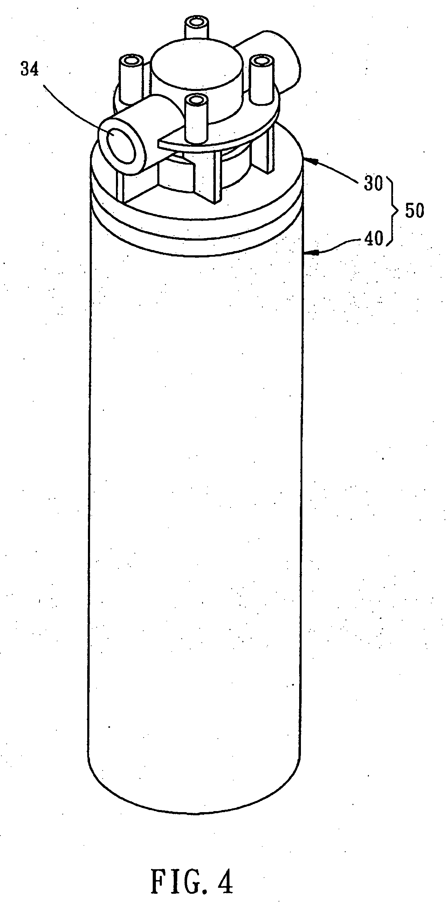

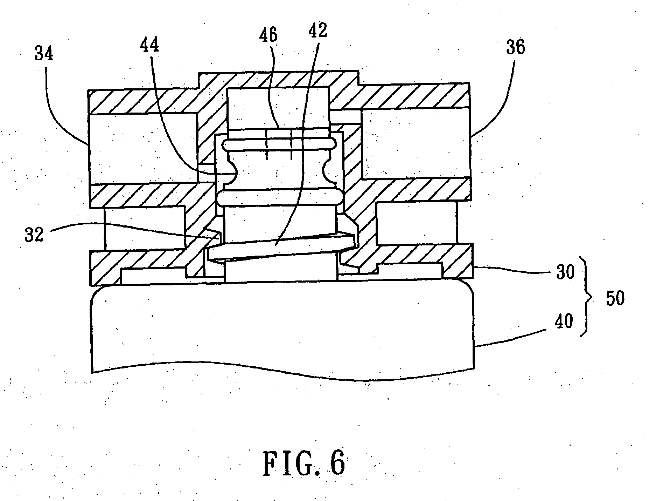

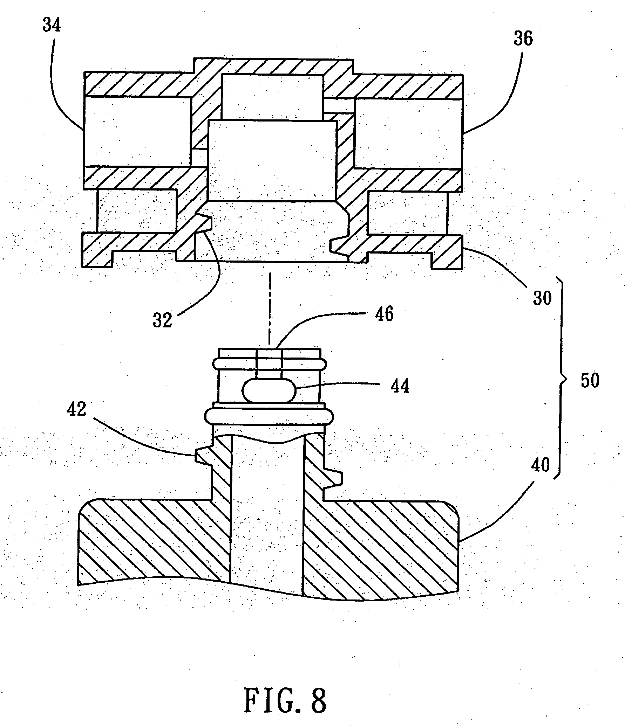

When a user wants to exchange the filter inside the housing **40,** he/she needs to pivot the filter assembly **50** about the axis of the water-guiding portions **22** of the holder **20** so as to locate at the second position **P2,** as shown in FIG 7, and then rotates the housing **40** 90 degrees clockwise such that the housing **40** is separated from the top cover **30,** as shown in FIG 8. Thus, the user can take the old filter out of the housing **40** and place a new filter inside. Thereafter, the user can hold the housing **40** to enable the jamming portion **42** to be inserted into the cavity **31** of the top cover **30** and subsequently rotates the housing **40** 90 degrees counterclockwise such that the housing **40** is engaged with the top cover **30,** as FIG 4 and FIG 6, and pushes the filter assembly **50** toward the main body **92** to locate at the first position **PI,** as shown in FIG 1, thereby accomplishing the filter exchange work.

By means of the aforesaid design, the top cover and the housing has a simple coupling procedure for enabling the user to exchange the filter conveniently. Furthermore, because of the distance between the connecting portion of the holder and the plate of the main body, the filter assembly can be rotated to the outside of the main body of the water purification apparatus during the filter exchange work in spite of the restriction of the interior space of the main body.

The invention being thus described, it will be obvious that the same may be varied in many ways.

## Claims

1. A water purification apparatus (90) comprising:
a main body (92) having an accommodation chamber (922) inside and a plate (94) on a top side thereof;
a lid (96) pivotally mounted on the main body (92) and closable on the main body (92);
a holder (20) mounted with the plate (94) of the main body (92) and defining a distance with the plate (94) of the main body (92);
a top cover (30) pivotally mounted with the holder (20) and having a retaining portion (32), an inlet (34) and an outlet (36) opposite to the inlet (34); and
a housing (40) having a jamming portion (42) detachably engageable with the retaining portion (32) of the top cover (30),
wherein the retaining portion (32) of the top cover (30) is a spiral protrusion and the jamming portion (42) of the housing (40) is a spiral protrusion such that the housing (40) is engaged with the top cover (30) through the engagement of the spiral protrusion of the housing (40) and the spiral protrusion of the top cover (30), wherein said jamming portion exhibits a first water filler hole (44) in communication with the inlet (34) of the top cover (30) and a second water filler hole (46) in communication with the outlet (36) of the top cover (30).

2. The water purification apparatus (90) as claimed in claim 1, wherein the distance is defined between a top side of a connecting portion (24) of the holder (20) and a bottom side of the plate (94) of the main body (92).

3. The water purification apparatus (90) as claimed in claim 2, wherein the holder (20) further includes a pair of water-guiding portions (22) extending from two sides of the connecting portion (24) of the holder (20).

4. The water purification apparatus (90) as claimed in claim 3, wherein the holder (20) further includes a plurality of O-rings (221), which are fixed on the water-guiding portions (22) and in contact with the inner periphery of the inlet (34) or the outlet (36) of the top cover (30) such that the top cover (30) is pivotable about the axis of the water-guiding portions (22) of the holder (20).

## Patentansprüche

1. Wasseraufreinigungs-Vorrichtung (90), welche umfasst
einen Hauptkörper (92) mit einer Aufnahmekammer (922) darin und einer Platte (94) auf einer oberen Seite davon,
einen Deckel (96), der an dem Hauptkörper (92) schwenkbar befestigt ist und den Hauptkörper (92) verschließen kann,
eine Halterung (20), die mit der Platte (94) des Hauptkörpers (92) befestigt ist und eine Entfernung mit der Platte (94) des Hauptkörpers (92) definiert,
eine obere Abdeckung (30), die mit der Halterung (20) schwenkbar befestigt ist und einen Absperrbereich (32), einen Einlaß (34) und einen Auslaß (36), der vom Einlaß (34) abgewandt vorliegt aufweist, und
ein Gehäuse (40), das einen Klemmbereich (42) aufweist, der mit dem Absperrbereich (32) der oberen Abdeckung (30) lösbar in Eingriff gebracht werden kann,
worin der Absperrbereich (32) der oberen Abdeckung (30) ein spiralfömiger Vorsprung ist und der Klemmbereich (42) des Gehäuse (40) ein spiralförmiger Vorprung ist, so dass das Gehäuse (40) mit der oberen Abdeckung (30) durch Eingriff des spiralförmigen Vorsprungs des Gehäuses (40) und des spiralfömigen Vorsprungs der oberen Abdeckung (30) in Eingriff gebracht wird, worin der Klemmbereich ein mit dem Einlaß (34) der oberen Abdeckung (30) in Verbindung stehendes erstes Wasserfüllloch (44) und ein mit dem Auslaß (36) der oberen Abdeckung (30) in Verbindung stehendes zweites Wasserfüllloch (46) aufweist.

2. Wasseraufreinigungs-Vorrichtung (90) nach Anspruch 1, worin die Entfernung zwischen einer oberen Seite eines Verbindungsbereichs der Halterung (20) und einer unteren Seite der Platte (94) des Hauptkörpers (92) definiert wird.

3. Wasseraufreinigungs-Vorrichtung (90) nach Anspruch 2, worin die Halterung (20) weiter ein Paar Wasserführungsbereiche (22) umfasst, das sich von zwei Seiten des Verbindungsbereichs der Halterung (20) erstreckt.

4. Wasseraufreinigungs-Vorrichtung (90) nach Anspruch 3, worin die Halterung (20) weiter mehrere O-Ringe (221) umfasst, die auf den Wasserführungsbereichen (22) fixiert sind und mit dem inneren Umfang des Einlaß (34) oder des Auslaß (36) der oberen Abdeckung (30) in Kontakt stehen, so dass die obere Abdeckung (30) um die Achse der Wasserführungsbereiche (22) der Halterung (20) schwenkbar sind.

## Revendications

1. Appareil de purification d'eau (90) comprenant :
un corps principal (92) présentant une chambre de logement (922) à l'intérieur et une plaque (94) sur une face supérieure correspondante ;
un couvercle (96) monté de manière pivotante sur le corps principal (92) et pouvant être fermé sur le corps principal (92) ;
un support (20) monté avec la plaque (94) du corps principal (92) et définissant une distance avec la plaque (94) du corps principal (92) ;
un recouvrement supérieur (30) monté de manière pivotante avec le support (20) et présentant une partie de retenue (32), une entrée (34) et une sortie (36) opposée à l'entrée (34) ; et
un boîtier (40) présentant une partie de blocage (42) pouvant se solidariser de manière amovible avec la partie de retenue (32) du recouvrement supérieur (30),
dans lequel la partie de retenue (32) du recouvrement supérieur (30) consiste en une saillie en spirale et la partie de blocage (42) du boîtier (40) consiste en une saillie en spirale de sorte que le boîtier (40) est solidaire du recouvrement supérieur (30) par la solidarisation de la saillie en spirale de boîtier (40) et de la saillie en spirale du recouvrement supérieur (30), dans lequel ladite partie de blocage montre un premier trou de remplissage d'eau (44) en communication avec l'entrée (34) du recouvrement supérieur (30) et un second trou de remplissage d'eau (46) en communication avec la sortie (36) du recouvrement supérieur (30).

2. Appareil de purification d'eau (90) selon la revendication 1, dans lequel la distance est définie entre un côté supérieur d'une partie de connexion (24) du support (20) et un côté de fond de la plaque (94) du corps principal (92).

3. Appareil de purification d'eau (90) selon la revendication 2, dans lequel le support (20) comprend en outre une paire de parties de guidage de l'eau (22) partant des deux côtés de la partie de connexion (24) du support (20).

4. Appareil de purification d'eau (90) selon la revendication 3, dans lequel le support (20) comprend en outre une pluralité de joints toriques (221), qui sont fixés sur les parties de guidage de l'eau (22) et en contact avec la périphérie interne de l'entrée (34) ou de la sortie (36) du recouvrement supérieur (30) de sorte que le recouvrement supérieur (30) peut pivoter autour de l'axe des parties de guidage de l'eau (22) du support (20).
